# EUROPÄISCHE PATENTSCHRIFT

(11) **EP 2 044 451 B1**
(45) Veröffentlichungstag und Bekanntmachung des Hinweises auf die Patenterteilung: **19.10.2011**
(21) Anmeldenummer: 07786252.2
(22) Anmeldetag: 21.07.2007
(51) Int. Cl.: G01R 31/26

(54) **Photovoltaikanlage**
Photovoltaic arrangement
Installation photovoltaïque

(30) Priorität: 25.07.2006 DE 102006034223
(43) Veröffentlichungstag der Anmeldung: 08.04.2009
(73) Patentinhaber: Diehl AKO Stiftung & Co. KG, 88239 Wangen (DE)
(72) Erfinder: KÖHLER, Claus, 88299 Leutkirch (DE); MORENT, Roland, 88239 Wangen (DE); FREHNER, Klaus, 88239 Wangen (DE)
(74) Vertreter: Diehl Patentabteilung
(86) Internationale Anmeldenummer: PCT/EP2007/006506
(87) Internationale Veröffentlichungsnummer: WO 2008/012040

(56) Entgegenhaltungen:
- EP-A- 1 160 876
- JP-A- 2004 260 015
- US-A- 5 669 987
- US-B1- 6 545 211

## Beschreibung

Die vorliegende Erfindung betrifft eine Photovoltaikanlage nach dem Oberbegriff des Anspruchs 1, und insbesondere eine solche Photovoltaikanlage mit der Möglichkeit einer einfachen und genauen Fehlerdiagnose.

Photovoltaikanlagen dienen der Einspeisung von elektrischem Strom in ein elektrisches Netz. Zu diesem Zweck können sie einen oder mehrere Photovoltaikgeneratoren aufweisen, welche jeweils aus mehreren Solarmodulen mit jeweils wenigstens einer Solarzelle bestehen. Die Solarmodule sind dabei zu so genannten Strings in Reihe zusammengeschaltet. Die photovoltaisch erzeugte Gleichspannung des/der Strings wird einem oder mehreren Wechselrichtern zugeführt, der/die diese in eine geregelte, standardisierte, ein- oder mehrphasige Wechselspannung umwandelt/umwandeln, um sie in ein Stromnetz einzuspeisen. Derartige Solarwechselrichter für einphasige Ausführungen sind zum Beispiel in der DE 196 42 522 C1 beschrieben, für dreiphasige Ausführungen zum Beispiel in der DE 199 37 410 A1.

Für den Betreiber einer Photovoltaikanlage ist die Kenntnis von Interesse, ob die eingesetzten Solarmodule und damit die gesamte Anlage ordnungsgemäß, d.h. wie vom Hersteller angegeben, funktioniert. Dabei kann die Funktionalität der Photovoltaikanlage aber nicht allein über die ins Netz eingespeiste elektrische Energie beurteilt werden, da diese von vielen Faktoren, wie beispielsweise der aktuellen Strahlungsintensität der Sonne, der Temperatur der Solarmodule, einer möglichen Verschmutzung und/oder Abschattung der Solarmodule, usw., abhängt.

Zur Beurteilung der Leistungsfähigkeit einer Photovoltaikanlage, genauer eines Strings einer solchen, werden nach dem Stand der Technik üblicherweise die charakteristischen Strom/Spannungs-Generatorkennlinien ausgemessen. Anhand der Generatorkennlinie kann beurteilt werden, ob einzelne Solarmodule in einem String ausgefallen oder abgeschattet sind. So offenbart zum Beispiel die DE 102 47 776 A1 ein Verfahren zur Diagnose von Photovoltaikgeneratoren, bei dem ein Wechselrichter über seine Mikrocomputersteuerung die Generatorkennlinie eines Strings zumindest teilweise vermisst, wobei als Last das Stromnetz benutzt wird. Anhand der Messergebnisse werden für den Betreiber der Photovoltaikanlage Wartungshinweise erzeugt.

Mit den herkömmlichen Verfahren zur Fehlerdiagnose von Photovoltaikanlagen kann zwar die Funktionsfähigkeit eines Strings mit mehreren Solarmodulen überprüft werden, der Betreiber der Photovoltaikanlage erhält jedoch keinen Hinweis darauf, welches Solarmodul in dem als fehlerhaft beurteilten String tatsächlich ausgefallen ist. Im Fall einer als fehlerhaft festgestellten Photovoltaikanlage ergibt sich daher weiterhin ein relativ hoher Wartungsaufwand.

Die JP 2004-260015 A offenbart eine Photovoltaikanlage, auf welcher die Oberbegriffe der Ansprüche 1 und 5 basieren. Diese bekannte Photovoltaikanlage enthält insbesondere mehrere Solarmodule, die jeweils mit einer Messvorrichtung zum Erfassen relevanter Betriebsdaten des jeweiligen Solarmoduls gekoppelt sind, und eine zentrale Steuerung, die im Wechselrichter der Photovoltaikanlage integriert ist und die die erfassten Betriebsdaten von den Messvorrichtungen abruft und analysiert und die Analyseergebnisse ausgibt.

Es ist die Aufgabe der vorliegenden Erfindung, eine verbesserte Photovoltaikanlage vorzusehen, bei welcher sowohl ein fehlerhafter String als auch ein fehlerhaftes Solarmodul in dem String selbst in einfacher Weise erkannt werden können.

Diese Aufgabe wird gelöst durch eine Photovoltaikanlage mit den Merkmalen des Anspruchs 1 sowie durch ein Verfahren zur Fehlerdiagnose einer Photovoltaikanlage mit den Merkmalen des Anspruchs 5. Vorteilhafte Ausgestaltungen und Weiterbildungen der Erfindung sind Gegenstand der jeweiligen abhängigen Ansprüche.

Die Photovoltaikanlage enthält mehrere Solarmodule mit jeweils wenigstens einer Solarzelle; einen Wechselrichter, dem die von den Solarmodulen photovoltaisch erzeugte Gleichspannung zugeführt wird und der diese in eine Wechselspannung umwandelt; und eine zentrale Steuerung zum Erfassen von fehlerhaften Solarmodulen. Zusätzlich ist jedes Solarmodul mit einer Messvorrichtung zum Erfassen relevanter Betriebsdaten des jeweiligen Solarmoduls versehen; und die zentrale Steuerung ist mit den Messvorrichtungen der Solarmodule zum Abrufen der von den Messvorrichtungen erfassten Betriebsdaten verbunden, zum Analysieren der abgerufenen Betriebsdaten der Messvorrichtungen ausgebildet und mit einer Ausgabevorrichtung zum Ausgeben des Analyseergebnisses versehen. Dabei enthält das Analyseergebnis im Fall eines fehlerhaften Solarmoduls auch Informationen darüber, welches Solarmodul als fehlerhaft analysiert worden ist.

Da jedes Solarmodul mit einer eigenen Messvorrichtung versehen ist, die relevante Betriebsdaten des jeweiligen Solarmoduls (z.B. Temperatur, Spannung, etc.) erfassen kann, und diese erfassten Betriebsdaten von einer zentralen Steuerung abgerufen und analysiert werden, ist es für die zentrale Steuerung möglich, nicht nur das Vorhandensein eines fehlerhaften Strings mit mehreren Solarmodulen, sondern auch das jeweils fehlerhafte Solarmodul selbst zu erkennen. Die zentrale Steuerung kann hierzu in regelmäßigen Abfragezyklen die entsprechenden Analysen durchführen. Dem Betreiber der Photovoltaikanlage wird dieses Analyseergebnis angezeigt, sodass er gezielt auf fehlerhafte Solarmodule reagieren kann und somit der Wartungsaufwand deutlich reduziert wird.

Gemäß der Erfindung weisen die Messvorrichtungen der Solarmodule außerdem jeweils einen ersten Anschluss und einen zweiten Anschluss auf und sind derart in Reihe geschaltet, dass jeweils der erste Anschluss eines nachfolgenden Solarmoduls mit dem zweiten Anschluss des vorangehenden Solarmoduls verbunden ist und die zentrale Steuerung nur mit dem ersten Anschluss der ersten Messvorrichtung verbunden ist. Der erste Anschluss der Messvorrichtungen ist jeweils zum Empfangen eines Abfragesignals von der zentralen Steuerung und zum Ausgeben der erfassten Betriebsdaten an die zentrale Steuerung ausgebildet und der zweite Anschluss der Messvorrichtungen ist jeweils vor einer Abfrage der Messvorrichtung durch die zentrale Steuerung deaktiviert und wird nach der Abfrage zum ersten Anschluss durchgeschaltet. Bei dieser Konstruktion können die Betriebsdaten der Solarmodule auf einfache Weise seriell erfasst und abgefragt werden.

In einer vorteilhaften Ausgestaltung der Erfindung ist die zentrale Steuerung im Wechselrichter integriert.

Die Solarmodule sind in üblicher Weise in einem oder in mehreren Strings in Reihe geschaltet.

In einer weiteren Ausgestaltung der Erfindung ist die zentrale Steuerung mit einem Speicher zum Speichern der abgefragten Betriebsdaten und/oder der Analyseergebnisse versehen.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine schematische Darstellung des Grundaufbaus einer Photovoltaikanlage gemäß einem bevorzugten Ausführungsbeispiel; und
- Fig. 2: eine schematische Darstellung zur Erläuterung einer speziellen Anordnung der Solarmodule einer Photovoltaikanlage von Fig. 1.

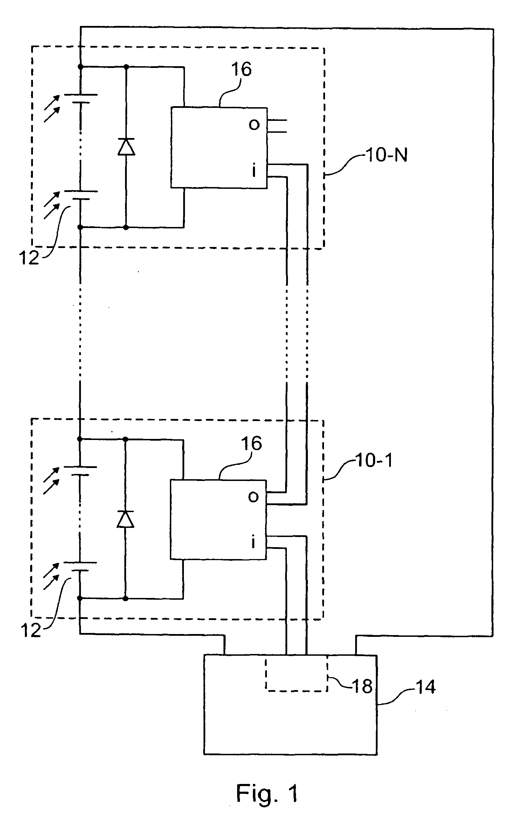

In Fig. 1 ist der Grundaufbau einer Photovoltaikanlage gemäß einem bevorzugten Ausführungsbeispiel schematisch dargestellt. Die Photovoltaikanlage enthält insbesondere mehrere, in einem so genannten String in Reihe geschaltete Solarmodule 10-1 bis 10-N, die jeweils mehrere in Reihe geschaltete Solarzellen 12 besitzen. Die durch die Solarzellen 12 photovoltaisch erzeugten Gleichspannungen werden einem Frequenzumrichter bzw. Solarwechselrichter 14 zugeführt, der die Gleichspannung in eine geregelte, standardisierte, ein- oder mehrphasige Wechselspannung umwandelt, um sie schließlich in ein Netz einzuspeisen.

Da eine derart aufgebaute Photovoltaikanlage und ihre Funktionsweise dem Fachmann bereits hinlänglich bekannt sind, wird sie hier nicht in mehr Details erläutert. Es sei nur darauf hingewiesen, dass im Rahmen dieser Erfindung auch mehrere Strings von Solarmodulen mit einem Wechselrichter gekoppelt sein können.

Jedes der Solarmodule 10 ist mit einer elektronischen Messvorrichtung 16 zum Beispiel in Form eines einfachen Mikrocomputers versehen, die relevante Betriebsdaten des jeweiligen Solarmoduls 10, wie beispielsweise Temperatur, Spannung und dergleichen, erfassen kann. Jede Messvorrichtung 16 ist mit einem ersten Anschluss (i) und einem zweiten Anschluss (o) ausgestattet, sodass die Messvorrichtungen 16 der Solarmodule 10 eines Strings in Reihe geschaltet werden können, wie in Fig. 1 veranschaulicht.

Dabei ist der erste Anschluss (i) der Messvorrichtung 16 des ersten Solarmoduls 10-1 mit einer zentralen Steuerung 18 verbunden, die in dem dargestellten Ausführungsbeispiel in vorteilhafter Weise in den Wechselrichter 14 integriert ist. Weiter ist der erste Anschluss (i) der Messvorrichtungen 16 der nachfolgenden Solarmodule 10-2 ... 10-N jeweils mit dem zweiten Anschluss (o) der Messvorrichtungen 16 der jeweils vorherigen Solarmodule 10-1 ... 10-N-1 verbunden. Der zweite Anschluss (o) der Messvorrichtung 16 des letzten Solarmoduls 10-N bleibt offen. Die vorgenannten Verbindungen zwischen den Messvorrichtungen 16 und zwischen der Messvorrichtung 16 des ersten Solarmoduls 10-1 und der zentralen Steuerung 18 sind zum Beispiel als Zweidrahtleitungen ausgebildet.

Die Messvorrichtungen 16 sind außerdem so konstruiert, dass ihre zweiten Anschlüsse (o) in ihrem Ausgangszustand zunächst deaktiviert sind, aber jeweils zum ersten Anschluss (i) der gleichen Messvorrichtung 16 durchgeschaltet werden können.

Ein Fehlerdiagnosezyklus der Photovoltaikanlage bzw. eines Strings der Photovoltaikanlage durch die zentrale Steuerung 18 wird folgendermaßen ausgeführt.

Im Ausgangszustand, d.h. zu Beginn des Fehlerdiagnosezyklus, sind die zweiten Anschlüsse (o) der Messvorrichtungen 16 aller Solarmodule 10 des Strings deaktiviert. Sendet die zentrale Steuerung 18 nun einen Abfragebefehl aus, so erreicht dieser den ersten Anschluss (i) der Messvorrichtung 16 des ersten Solarmoduls 10-1. Der Abfragebefehl der zentralen Steuerung löst eine Erfassung der relevanten Betriebsdaten des ersten Solarmoduls 10-1 durch die Messvorrichtung 16 aus. Die erfassten Betriebsdaten werden von der Messvorrichtung 16 des ersten Solarmoduls 10-1 vom ersten Anschluss (i) an die zentrale Steuerung 18 gemeldet, und die Messvorrichtung 16 des ersten Solarmoduls 10-1 schaltet dann ihren zweiten Anschluss (o) auf ihren ersten Anschluss (i) durch.

Die zentrale Steuerung 18 im Wechselrichter 14 liest, analysiert und speichert die von der Messvorrichtung 16 des ersten Solarmoduls 10-1 empfangenen Betriebsdaten. Hierzu ist die zentrale Steuerung 18 mit einem Speicher (nicht dargestellt) versehen.

Dann sendet die zentrale Steuerung 18 einen weiteren Abfragebefehl. Dieser gelangt, da der zweite Anschluss (o) der Messvorrichtung 16 des ersten Solarmoduls 10-1 zu ihrem ersten Anschluss (i) durchgeschaltet ist, zum ersten Anschluss (i) der Messvorrichtung 16 des zweiten Solarmoduls 10-2. Hier läuft der gleiche Vorgang ab, wie oben in Zusammenhang mit dem ersten Abfragebefehl der zentralen Steuerung 18 beschrieben.

Die zentrale Steuerung 18 sendet so lange Abfragebefehle, bis diese keine weitere Messvorrichtung 16 eines Solarmoduls 10 mehr erreichen und daher keine weiteren Betriebsdaten mehr an die zentrale Steuerung 18 zurückgesendet werden. Auf diese Weise erkennt die zentrale Steuerung 18, dass ein Abfragezyklus beendet ist, und setzt über einen Reset-Befehl die Messvorrichtungen 16 aller angeschlossenen Solarmodule 10 wieder in den Ausgangszustand zurück, in dem ihre zweiten Anschlüsse (o) deaktiviert sind.

Nach Beendigung eines wie oben beschrieben durchgeführten Abfragezyklus hat die zentrale Steuerung 18 alle Betriebsdaten bzw. deren Analyseergebnisse in ihrem Speicher (nicht dargestellt) in der Reihenfolge abgelegt, in der die Solarmodule 10 mit der zentralen Steuerung 18 bzw. dem Wechselrichter 14 verbunden sind. Enthält der String ein fehlerhaftes Solarmodul 10, so wird dies von der zentralen Steuerung 18 erkannt, und auch seine Position innerhalb der Photovoltaikanlage ist bekannt.

Die zentrale Steuerung 18 gibt über eine Ausgabevorrichtung (nicht dargestellt), wie zum Beispiel ein Display, einen Drucker, eine externe Anzeige und dergleichen, die Analyseergebnisse an den Betreiber der Photovoltaikanlage aus. Im Fall eines fehlerhaften Solarmoduls 10 enthalten die ausgegebenen Analyseergebnisse außerdem die genaue Position des fehlerhaften Solarmoduls 10. Das defekte Solarmodul 10 kann auf diese Weise einfach und ohne großen Aufwand erkannt und ausgetauscht bzw. gewartet werden.

Auch wenn ein Solarmodul 10 in einem String ausgetauscht wird, kann bei entsprechendem Anschluss seiner Messvorrichtung 16 die Position dieses neuen Solarmoduls 10 von der zentralen Steuerung 18 automatisch korrekt erfasst werden.

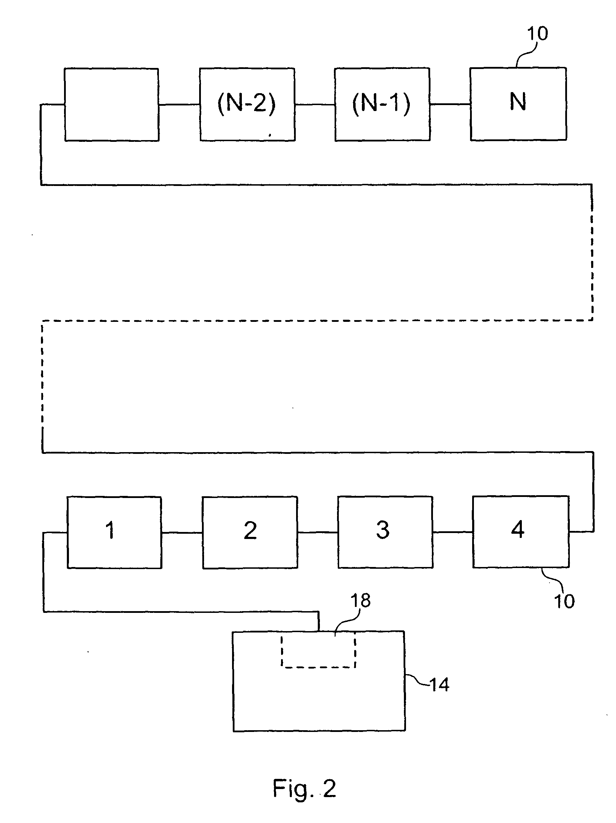

Fig. 2 zeigt ein zweites Ausführungsbeispiel als Abwandlung des Ausführungsbeispiels von Fig. 1.

Dieses Ausführungsbeispiel unterscheidet sich von dem obigen Ausführungsbeispiel in der Art der Anordnung der Solarmodule 10, die hier matrixförmig angeordnet sind. Der besseren Übersichtlichkeit halber ist in Fig. 2 nur die Verdrahtung der Messvorrichtungen 16 der Solarmodule 10 skizziert. Diese Verdrahtung und die matrixförmige Anordnung sind in der zentralen Steuerung 18 bzw. in deren Speicher (nicht dargestellt) abgelegt, sodass die zentrale Steuerung 18 die Analyseergebnisse zusammen mit den richtigen Positionsinformationen der Solarmodule 10 auf der Ausgabevorrichtung (nicht dargestellt) anzeigen kann.

## Patentansprüche

1. Photovoltaikanlage, mit mehreren Solarmodulen (10) mit jeweils wenigstens einer Solarzelle (12); einem Wechselrichter (14), dem die von den Solarmodulen (10) photovoltaisch erzeugte Gleichspannung zugeführt wird und der diese in eine Wechselspannung umwandelt; und einer zentralen Steuerung (18) zum Erfassen von fehlerhaften Solarmodulen (10),
wobei jedes Solarmodul (10) mit einer Messvorrichtung (16) zum Erfassen relevanter Betriebsdaten des jeweiligen Solarmoduls (10) versehen ist und die zentrale Steuerung (18) mit den Messvorrichtungen (16) der Solarmodule (10) zum Abrufen der von den Messvorrichtungen (16) erfassten Betriebsdaten verbunden ist, zum Analysieren der abgerufenen Betriebsdaten der Messvorrichtungen (16) ausgebildet ist und eine Ausgabevorrichtung zum Ausgeben des Analyseergebnisses enthält, wobei das Analyseergebnis im Fall eines fehlerhaften Solarmoduls (10) auch Informationen darüber enthält, welches Solarmodul (10) als fehlerhaft analysiert worden ist,
**dadurch gekennzeichnet, dass**
die Messvorrichtungen (16) der Solarmodule (10) jeweils einen ersten Anschluss (i) und einen zweiten Anschluss (o) aufweisen und derart in Reihe geschaltet sind, dass jeweils der erste Anschluss (i) eines nachfolgenden Solarmoduls (10) mit dem zweiten Anschluss (o) des vorangehenden Solarmoduls (10) verbunden ist und die zentrale Steuerung (18) nur mit dem ersten Anschluss (i) der Messvorrichtung (16) des ersten Solarmoduls (10) verbunden ist; der erste Anschluss (i) der Messvorrichtungen (16) jeweils zum Empfangen eines Abfragesignals von der zentralen Steuerung (18) und zum Ausgeben der erfassten Betriebsdaten an die zentrale Steuerung (18) ausgebildet ist; und der zweite Anschluss (o) der Messvorrichtungen (16) jeweils vor einer Abfrage der Messvorrichtung durch die zentrale Steuerung (18) deaktiviert ist und nach der Abfrage zum ersten Anschluss (i) der jeweiligen Messvorrichtung (16) durchgeschaltet ist.

2. Photovoltaikanlage nach Anspruch 1,
**dadurch gekennzeichnet,**
**dass** die zentrale Steuerung (18) im Wechselrichter (14) integriert ist.

3. Photovoltaikanlage nach Anspruch 1 oder 2,
**dadurch gekennzeichnet,**
**dass** die Solarmodule (10) in einem oder in mehreren Strings in Reihe geschaltet sind.

4. Photovoltaikanlage nach einem der vorherigen Ansprüche,
**dadurch gekennzeichnet,**
**dass** die zentrale Steuerung (18) mit einem Speicher zum Speichern der abgefragten Betriebsdaten und/oder der Analyseergebnisse versehen ist.

5. Verfahren zur Fehlerdiagnose einer Photovoltaikanlage mit mehreren Solarmodulen (10) mit jeweils wenigstens einer Solarzelle (12) und einem Wechselrichter (14), dem die von den Solarmodulen (10) photovoltaisch erzeugte Gleichspannung zugeführt wird und der diese in eine Wechselspannung umwandelt, wobei jedes Solarmodul (10) mit einer Messvorrichtung (16) versehen ist, die relevante Betriebsdaten des jeweiligen Solarmoduls erfasst, und die erfassten Betriebsdaten zentral analysiert werden und das Analyseergebnis ausgegeben wird, wobei das Analyseergebnis im Fall eines fehlerhaften Solarmoduls (10) auch Informationen darüber enthält, welches Solarmodul als fehlerhaft analysiert worden ist,
**dadurch gekennzeichnet, dass**
die Messvorrichtungen (16) der Solarmodule (10) jeweils einen ersten Anschluss (i) und einen zweiten Anschluss (o) aufweisen und derart in Reihe geschaltet sind, dass jeweils der erste Anschluss (i) eines nachfolgenden Solarmoduls (10) mit dem zweiten Anschluss (o) des vorangehenden Solarmoduls (10) verbunden ist und die zentrale Steuerung (18) nur mit dem ersten Anschluss (i) der Messvorrichtung (16) des ersten Solarmoduls (10) verbunden ist; und die Betriebsdaten der Solarmodule (10) in einer solchen Weise seriell erfasst und abgefragt werden, dass der erste Anschluss (i) der Messvorrichtungen (16) jeweils ein Abfragesignal von der zentralen Steuerung (18) empfängt und die erfassten Betriebsdaten an die zentrale Steuerung (18) ausgibt, und der zweite Anschluss (o) der Messvorrichtungen (16) jeweils vor einer Abfrage der Messvorrichtung durch die zentrale Steuerung (18) deaktiviert ist und nach der Abfrage zum ersten Anschluss (i) der jeweiligen Messvorrichtung (16) durchgeschaltet wird.

6. Verfahren nach Anspruch 5,
**dadurch gekennzeichnet,**
**dass** die erfassten Betriebsdaten und/oder die Analyseergebnisse zentral gespeichert werden.

## Claims

1. Photovoltaic installation, comprising a plurality of solar modules (10) each comprising at least one solar cell (12); an inverter (14), to which the DC voltage generated photovoltaically by the solar modules (10) is fed and which converts said voltage into an AC voltage; and a central controller (18) for detecting faulty solar modules (10),
wherein each solar module (10) is provided with a measuring device (16) for detecting relevant operating data of the respective solar module (10) and the central controller (18) is connected to the measuring devices (16) of the solar modules (10) for retrieving the operating data detected by the measuring devices (16), is designed for analysing the retrieved operating data of the measuring devices (16) and contains an output device for outputting the analysis result, wherein the analysis result in the case of a faulty solar module (10) also contains information about which solar module (10) has been analysed as faulty,
**characterized in that**
the measuring devices (16) of the solar modules (10) in each case have a first connection (i) and a second connection (o) and are connected in series in such a way that the first connection (i) of a succeeding solar module (10) is in each case connected to the second connection (o) of the preceding solar module (10) and the central controller (18) is connected only to the first connection (i) of the measuring device (16) of the first solar module (10); the first connection (i) of the measuring devices (16) is designed in each case for receiving an interrogation signal from the central controller (18) and for outputting the detected operating data to the central controller (18); and the second connection (o) of the measuring devices (16) is in each case deactivated before an interrogation of the measuring device by the central controller (18) and, after the interrogation, is connected through to the first connection (i) of the respective measuring device (16).

2. Photovoltaic installation according to Claim 1,
**characterized**
**in that** the central controller (18) is integrated in the inverter (14).

3. Photovoltaic installation according to Claim 1 or 2,
**characterized**
**in that** the solar modules (10) are connected in series in one or in a plurality of strings.

4. Photovoltaic installation according to any of the preceding claims,
**characterized**
**in that** the central controller (18) is provided with a memory for storing the interrogated operating data and/or the analysis results.

5. Method for fault diagnosis of a photovoltaic installation comprising a plurality of solar modules (10) each comprising at least one solar cell (12) and an inverter (14) to which the DC voltage generated photovoltaically by the solar modules (10) is fed and which converts said voltage into an AC voltage, wherein each solar module (10) is provided with a measuring device (16), which detects relevant operating data of the respective solar module, and the detected operating data are analysed centrally and the analysis result is output, wherein the analysis result in the case of a faulty solar module (10) also contains information about which solar module has been analysed as faulty,
**characterized in that**
the measuring devices (16) of the solar module (10) in each case have a first connection (i) and a second connection (o) and are connected in series in such a way that the first connection (i) of a succeeding solar module (10) is in each case connected to the second connection (o) of the preceding solar module (10) and the central controller (18) is connected only to the first connection (i) of the measuring device (16) of the first solar module (10); and the operating data of the solar modules (10) are serially detected and interrogated in a manner such that the first connection (i) of the measuring devices (16) in each case receives an interrogation signal from the central controller (18) and outputs the detected operating data to the central controller (18), and the second connection (o) of the measuring devices (16) is in each case deactivated before an interrogation of the measuring device by the central controller (18) and, after the interrogation, is connected through to the first connection (i) of the respective measuring device (16).

6. Method according to Claim 5,
**characterized**
**in that** the detected operating data and/or the analysis results are stored centrally.

## Revendications

1. Système photovoltaïque comprenant plusieurs modules solaires (10) comprenant chacun au moins une cellule solaire (12) ; un onduleur (14) auquel est fournie la tension continue produite de manière photovoltaïque par les modules solaires (10) et qui la convertit en une tension alternative ; et une unité de commande centrale (18) destinée à détecter des modules solaire défectueux (10),
dans lequel chaque module solaire (10) est muni d'un dispositif de mesure (16) destiné à collecter des données de fonctionnement pertinentes du module solaire respectif (10), l'unité de commande centrale (18) est connectée aux dispositifs de commande (16) des modules solaires (10) pour récupérer les données de fonctionnement collectées par les dispositifs de mesure (16), et est conçue pour analyser les données de fonctionnement récupérées des dispositifs de mesure (16) et comporte un dispositif de sortie pour la fourniture en sortie du résultat d'analyse, le résultat d'analyse contenant en outre des informations indiquant, en cas de module solaire (10) défectueux, quel module solaire (10) a été analysé comme étant défectueux,
**caractérisé en ce que**
les dispositifs de mesure (16) des modules solaires (10) comprennent chacun une première borne (i) et une seconde borne (o) et **en ce qu'**ils sont connectés en série de telle manière que la première borne (i) d'un module solaire (10) suivant soit respectivement connectée à la seconde borne (o) du module solaire (10) précédent et que l'unité de commande centrale (18) ne soit connectée qu'à la première borne (i) du dispositif de mesure (16) du premier module solaire (10) ; **en ce que** la première borne (i) des dispositifs de mesure (16) est conçue de manière à recevoir respectivement un signal d'interrogation de l'unité de commande (18) et pour fournir en sortie les données de fonctionnement collectées à l'unité de commande centrale (18) ; et **en ce que** la seconde borne (o) des dispositifs de mesure (16) est respectivement désactivée par l'unité de commande centrale (18) avant une interrogation du dispositif de mesure et **en ce qu'**elle est activée après l'interrogation appliquée à la première borne (i) du dispositif de mesure (16) respectif.

2. Système photovoltaïque selon la revendication 1, **caractérisé en ce que** l'unité de commande centrale (18) est intégrée à l'onduleur (14).

3. Système photovoltaïque selon la revendication 1 ou 2, **caractérisé en ce que** les modules solaires (10) sont connectés en série en une ou plusieurs chaînes.

4. Système photovoltaïque selon les revendications précédentes, **caractérisé en ce que** l'unité de commande centrale (18) est munie d'une mémoire pour stocker les données de fonctionnement et/ou les résultats d'analyse récupérés.

5. Procédé de diagnostic de défauts d'un système photovoltaïque comprenant plusieurs modules solaires (10) comprenant chacun au moins une cellulaire solaire (12) et un onduleur (14) auquel est fournie la tension continue produite de manière photovoltaïque par les modules solaires (10) et qui la convertit en une tension alternative, dans lequel chaque module solaire (10) est muni d'un dispositif de mesure (16) qui collecte des données de fonctionnement pertinentes du module solaire respectif, et dans lequel les données de fonctionnement collectées sont analysées de manière centralisée et le résultat d'analyse est fourni en sortie, le résultat d'analyse contenant en outre des informations indiquant, en cas de module solaire (10) défectueux, quel module solaire a été analysé comme étant défectueux,
**caractérisé en ce que**
les dispositifs de mesure (16) des modules solaires (10) comprennent chacun une première borne (i) et une seconde borne (o) et **en ce qu'**ils sont connectés en série de telle manière que la première borne (i) d'un module solaire (10) suivant soit respectivement connectée à la seconde borne (o) du module solaire (10) précédent et que l'unité de commande centrale (18) ne soit connectée qu'à la première borne (i) du dispositif de mesure (16) du premier module solaire (10) ; et **en ce que** les données de fonctionnement des modules solaires (10) sont collectées et récupérées en série de telle manière que la première borne (i) des dispositifs de mesure (16) reçoive respectivement un signal d'interrogation de l'unité de commande centrale (18) et fournisse en sortie les données de fonctionnement collectées à l'unité de commande centrale (18), et que la seconde borne (o) des dispositifs de mesure (16) soit respectivement désactivée par l'unité de commande centrale (18) avant une interrogation du dispositif de mesure et soit activée après l'interrogation appliquée à la première borne (i) du dispositif de mesure (16) respectif.

6. Procédé selon la revendication 5, **caractérisé en ce que** les données de fonctionnement et/ou les résultats d'analyse collectés sont mémorisés de manière centralisée.
